(19) **Europäisches Patentamt / European Patent Office / Office européen des brevets**

(11) **EP 2 228 348 B1**

(12) **EUROPEAN PATENT SPECIFICATION**

(45) Date of publication and mention
of the grant of the patent:
**14.02.2018 Bulletin 2018/07**

(21) Application number: **09730811.8**

(22) Date of filing: **06.04.2009**

(51) Int Cl.:
**C03B 5/04** *(2006.01)*  **C03B 5/23** *(2006.01)*
**C03B 5/235** *(2006.01)*  **C03B 5/225** *(2006.01)*

(86) International application number:
**PCT/JP2009/057074**

(87) International publication number:
**WO 2009/125750 (15.10.2009 Gazette 2009/42)**

(54) **MOLTEN GLASS PRODUCTION APPARATUS AND MOLTEN GLASS PRODUCTION METHOD USING SAME**

VORRICHTUNG ZUR HERSTELLUNG VON SCHMELZGLAS UND VERFAHREN ZUR HERSTELLUNG VON SCHMELZGLAS DAMIT

APPAREIL DE FABRICATION DE VERRE FONDU ET PROCÉDÉ DE FABRICATION DE VERRE FONDU UTILISANT CET APPAREIL

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.04.2008 JP 2008099497**

(43) Date of publication of application:
**15.09.2010 Bulletin 2010/37**

(73) Proprietor: **Asahi Glass Company, Limited**
**Chiyoda-ku**
**Tokyo 100-8405 (JP)**

(72) Inventors:
• **ITOH, Hajime**
**Tokyo 100-8405 (JP)**
• **YAMAMICHI, Hironobu**
**Tokyo 100-8405 (JP)**

• **NISHIKAWA, Toru**
**Tokyo 100-8405 (JP)**
• **NINOMIYA, Kazuo**
**Tokyo 100-8405 (JP)**
• **HAMAMOTO, Hiroaki**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
EP-A1- 0 556 576  EP-A1- 0 949 210
JP-A- 5 208 830  JP-A- 9 124 323
JP-A- 2000 128 549  JP-A- 2006 306 662
JP-A- 2008 019 110  US-A- 3 928 014
US-A- 4 046 546  US-A- 4 852 118
US-A- 6 085 551

**Description**

TECHNICAL FIELD

The present invention relates to a molten glass producing apparatus, a molten glass producing method employing the apparatus, an apparatus for producing a glass article and a method for producing a glass article.

BACKGROUND ART

For the method for producing a glass article for buildings, vehicles, flat panel displays and so on, there has been a demand for producing an article of higher quality and saving energy, namely, a demand for producing a glass article of high quality free from bubbles and reducing energy consumed during the production of the glass article. There are some factors blocking the production of a glass article of high quality, in particular, the existence of bubbles in molten glass and inhomogeneity of molten glass become often problematic. As methods for producing a glass article of high quality without remaining bubbles, there is a vacuum degassing method disclosed in Patent Document 1, proposed by the applicant of this application, for example. According to this method, bubbles in the molten glass are made growing under a subatmospheric pressure to raise and break the bubbles so as to remove them. This method is executed by employing a vacuum degassing apparatus.

The vacuum degassing method is employed to produce a glass article of high quality. However, for molten glass produced in large scale and in large variety of descriptions of glass, usable for glass sheets for buildings or vehicles, there has recently been desired to refine the molten glass by the vacuum degassing method having a high refining effect. However, it was difficult to develop a technique sufficiently enough to compensate the capital investment, and such technique has not been proposed so far to the best of the applicant's knowledge. In the conventional method of producing molten glass usable for buildings, vehicles and so on, as disclosed in Patent Document 2, the area of a melting tank is divided into a melting area and a refining area and molten glass is circulated in each area so as to melt a raw material, and refine and homogenize the molten glass. Specifically, in the melting area, a glass material is melted and the molten glass is agitated by a circulation flow whereby initial homogenization is carried out, and the molten glass stays in the refining area in a certain time by a circulation flow whereby the refining and homogenization of the molten glass are carried out.

On the other hand, the saving energy has been required in any step of producing a glass article. In particular, there has been a strong demand to save energy in a melting step for a glass material since a large quantity of energy is consumed there. In answer to this, there is a technique of improving the combustion system of the melting tank or a technique of changing the property of a circulation flow of molten glass in the melting tank as described later. These techniques have had certain effects.

Generally, energy consumption efficiency in melting a glass material becomes high in approximately proportional to the volume of the melting tank, and accordingly, in order to achieve high energy saving, it is effective to increase the volume and the output of a melting tank other than an attempt to improve the combustion system. However, one can easily imagine that there are various disadvantages in constructing a molten glass producing apparatus including a melting tank with a larger volume than conventional ones. For instance, there are a restriction to the location for the construction, an increased cost for the construction and so on. Further, it is rare that a molten glass producing apparatus treats only for glass of specified description. Accordingly, glass cullet (glass pieces in a solid state which are produced during and after the production of glass articles including a melting process and which can be reusable for molten glass) is produced when glass materials are changed in response to a change of description of glass, and there is a decrease in operational efficiency with such change. Accordingly, when the volume of the melting tank is increased, it is unlikely to save energy in the total operation of the apparatus. In such circumstances, there is a very strong demand for a molten glass producing apparatus which has at least the same size as the conventional molten glass producing apparatuses and can realize a far high energy saving while overcoming the relation between the volume of a melting tank and the energy consuming efficiency as the conventional knowledge, as well as a melting glass producing method and a method for producing a glass article.

Patent Document 2 discloses a method for reducing energy consumed at the time of melting glass, taking notice of a circulation flow in the melting tank. EP-A-0556576 discloses an apparatus and a method for producing molten glass by means of vacuum degassing including a vacuum degassing apparatus as well as first and second conduits providing respective connections to a melting tank as well as to forming means.

PRIOR ART DOCUMENT

PATENT DOCUMENT

Patent Document 1:    JP-A-2-221129
Patent Document 2:    JP-A-9-124323

DISCLOSURE OF THE INVENTION

OBJECTS TO BE ACOMPLISHED BY THE INVENTION

However, in the method of Patent Document 2 describing that the area of the melting tank is divided into the melting area and the refining area, and the refining and the homogenization of molten glass are carried out by circulating the molten glass in each area, the structure itself is disadvantageous in saving energy. Namely, in order to reduce an amount of bubble in the molten glass to a level sufficient for producing the molten glass, it is necessary to stay the molten glass in the refining area in a certain time. In the melting tank shown in the Figure of Patent Document 2, the refining area occupies about 2/3 of the entire length of the tank. A substantially large energy is necessary to maintain such large refining area to a predetermined temperature. Further, in the method described in Patent Document 2, a molten glass circulation flow is formed in each of the melting area and the refining area. However, since the both circulation flows are not separated completely, a part of a circulation flow moves the other, specifically, a part of molten glass of lower temperature in the refining area moves to the melting area. Accordingly, much amount of energy is required in the melting area in order to maintain the temperature for melting a glass material.

In a case of a large molten glass producing apparatus for producing glass articles for buildings, vehicles and so on, there is a possibility of producing a glass article of high quality without remaining bubbles by combining the melting tank disclosed in Patent Document 2 and the vacuum degassing apparatus disclosed in Patent Document 1, if a relation of effect vs cost is neglected. However, the realization of the both demands for procuring a glass article of high quality and saving energy is difficult by merely combining these techniques. There is no suggestion to realize these in Patent Document 1 or Patent Document 2.

The present inventions have been made in consideration as described above, and it is an object of the present inventions to provide a molten glass producing apparatus capable of realizing simultaneously an increase of quality of a glass article and saving energy for producing molten glass, a molten glass producing method employing such apparatus, an apparatus for producing a glass article and a method for producing a glass article.

MEANS TO ACCOMPLISH THE OBJECTS

The present invention, in addition to employing a vacuum degassing apparatus as a glass refining means in order to realize simultaneously an enhancement of quality of a glass article and saving energy in producing molten glass, employs a melting tank structure capable of saving energy by taking notice of a vacuum degassing effect by the vacuum degassing apparatus and a conduit structure having a specified structure that can supply molten glass at high efficiency from the melting tank to the vacuum degassing apparatus and that can homogenize the molten glass, in particular, can adjust the temperature of the molten glass supplied to the vacuum degassing apparatus to a level suitable for vacuum-degassing. Specifically, the present invention can realize saving energy in producing the molten glass by making the length of the refining area of the melting tank shorter than the length of the conventional refining area, so that the decrease of temperature of the molten glass in the refining area is avoidable. Further, in addition to shortening the length of the refining area of the melting tank, an improved homogenization of molten glass and the cooling of the molten glass are carried out in the conduit structure, particularly, at an upstream side in the flowing direction of molten glass whereby further effective vacuum degassing is carried out in the vacuum degassing apparatus. With this, the enhancement of quality of a glass article and the saving energy in producing the molten glass can be realized simultaneously.

Namely, the present invention provides a molten glass producing apparatus as defined in claim 1, i.a. comprising a melting tank for melting a glass material, a vacuum degassing apparatus having an inner part maintained in a subatmospheric pressure so that bubbles in molten glass supplied from the melting tank are removed by raising and breaking them, a first conduit structure connecting the melting tank to the vacuum degassing apparatus, and a second conduit structure disposed at a downstream side of the vacuum degassing apparatus to introduce the molten glass to a forming means, the molten glass producing apparatus being characterized in that the melting tank is provided with a separating means for separating the area for circulating the molten glass in the melting tank into an upstream circulation flow and a downstream circulation flow, the distance from the separating means to the downstream end of the molten glass flow path in the melting tank is from 0.1 $L_F$ to 0.45 $L_F$ where $L_F$ represents the length of the molten glass flow path in the melting tank, a wide portion is formed in the first conduit structure at a upstream side in the flowing direction of molten glass, the width of the wide portion being larger than another area of the conduit structure, and means for cooling the molten glass passing through the wide portion is disposed in the wide portion.

In the molten glass producing apparatus of the present invention, the wide portion satisfies the following formulas: $0.2 \leq W/L \leq 1.5$ and $500 \leq h \leq 5000$ (in the formula, W represents the largest width (mm) of the molten glass flow path, L represents the length (mm) of the area that a width of the molten glass flow path in the wide portion takes the largest width W and h represents the height (mm) of the molten glass flow path in the area that a width of the molten glass flow path takes the largest width W).

Here, the height h of the molten glass flow path does not indicate the height (the depth) of the molten glass itself, but indicates the height of the inner space from the bottom of the wide portion to the upper part. The depth (the height) of the molten glass flow itself in this portion is about 0.3 h to 1 h time of the height h of the molten glass flow path, and the upper plane of the molten glass flow itself may contact a gas phase at the free surface (liquid plane) or may contact with a wall member above the molten glass flow path. The distance from the liquid plane of the molten glass to the upper part of the flow path is preferably larger than 0.3 m and smaller than 3 m.

It is preferred that in the wide portion, the largest width W (mm) of the molten glass flow path and the length L (mm) of the area that a width of the molten glass flow path in the wide portion takes the largest width W satisfy the following formulas: $2000 \leq W \leq 12000$ and $1000 \leq L \leq 20000$.

Further, in the molten glass producing apparatus of the present invention, it is preferred that the wide portion is provided with means for agitating the molten glass passing through the wide portion.

Further, in the molten glass producing apparatus of the present invention, the wide portion is provided with means for preventing the molten glass from back-flowing in the wide portion.

In the molten glass producing apparatus of the present invention, it is preferred that the separating means is a dam wall projecting from the bottom of the molten glass flow path in the melting tank, the dam wall extending in a width direction of the molten glass flow path in the melting tank wherein when the height of the molten glass flow path at an upstream side of the dam wall in the flowing direction of molten glass in the melting tank is represented by $h_1$, the height from the bottom of the molten glass flow path at an upstream side of the dam wall in the flowing direction of molten glass to the upper end of the dam wall is from 0.1 $h_1$ to 0.3 $h_1$.

Further, in the melting tank, the bottom of the molten glass flow path at a downstream side of the dam wall in the flowing direction of molten glass is higher than the bottom of the molten glass flow path at an upstream side of the dam wall in the flowing direction of molten glass.

Further, it is preferred that in the melting tank, when $h_1$ (mm) represents the height of the molten glass flow path at an upstream side of the dam wall in the flowing direction of molten glass, $h_2$ (mm) represents the height from the bottom of the molten glass flow path at an upstream side of the dam wall in the flowing direction of molten glass to the upper end of the dam wall, and $h_3$ (mm) represents the height from the bottom of the molten glass flow path at an upstream side of the dam wall in the flowing direction of molten glass to the bottom of the molten glass flow path at a downstream side of the dam wall in the flowing direction of molten glass, $h_1$, $h_2$ and $h_3$ satisfy the following formulas: $h_3 < h_2$ and $0 < h_3 \leq 0.6 h_2$.

Here, the height h1 of the molten glass flow path does not indicate the height (the depth) of the molten glass itself, but indicates the height of the inner space from the bottom of the melting tank for melting the molten glass to the upper part. The height (the depth) of the molten glass itself takes generally a value obtained by subtracting a value ranging 1 to 8 m from the height of the molten glass flow path.

Further, it is preferred that the melting tank is provided with a bubble generator having a discharge port located near the bottom of the molten glass flow path at an upstream side of the dam wall in the flowing direction of molten glass, and the distance between the bubble generator and the dam wall in the flowing direction of the molten glass is at least 500 mm.

Further, in the molten glass producing apparatus of the present invention, the separating means may be bubble generators having discharge ports located near the bottom of the molten glass flow path in the melting tank, the discharge ports being arranged in the width direction of the molten glass flow path.

In the molten glass producing apparatus of the present invention, it is preferred that means for heating the molten glass passing through the first conduit structure at a downstream side of the wide portion in the flowing direction of molten glass, are disposed.

Further, in the molten glass producing apparatus of the present invention, it is preferred that the position of the molten glass flow path in the first conduit structure at a downstream side of the wide portion in the flowing direction of the molten glass is lower than the position of the molten glass flow path in the wide portion.

In the molten glass producing apparatus of the present invention, the molten glass is molten glass of soda-lime glass.

Further, the present invention is to provide a molten glass producing method employing any one of molten glass producing apparatus described above.

In the molten glass producing method of the present invention, it is preferred that a glass material is melted by heat of combustion of a mixture of fuel and oxygen.

Further, in the molten glass producing method of the present invention, the amount of bubbles in the molten glass passing through the vacuum degassing vessel of the vacuum degassing apparatus is measured with a bubble inspecting means to adjust the degree of depressurization in the vacuum degassing vessel in response to a result of measurement of bubbles.

Further, the present invention is to provide an apparatus for producing a glass article which comprises a molten glass producing apparatus described above, a forming means disposed at a downstream side of the molten glass producing apparatus to form the molten glass and an annealing means for annealing the formed glass.

Further, the present invention is to provide a method for producing a glass article which employs a molten glass producing apparatus described above, a forming means disposed at a downstream side of the molten glass producing apparatus to form the molten glass and an annealing means for annealing the formed glass.

Further, the present invention is to provide a method for producing a glass article which comprises a step of producing molten glass by a molten glass producing method described above, a step of forming the molten glass and a step of annealing the formed glass.

## EFFECTS OF THE INVENTION

According to the present invention, the production of a glass article of high quality, with lessened bubbles and saving energy in producing the molten glass can simultaneously be realized.

According to the present invention, it is possible to save upmost about 40% of energy consumption in comparison with the conventional molten glass producing apparatus for refining the molten glass by circulating it in the refining area formed in the melting tank under condition that the same amount of molten glass is produced. Further, in a case of melting a glass material by oxygen combustion in the melting tank, upmost about 60% of energy can be saved.

In the present invention, it is unnecessary to use a refining agent, and therefore, a glass material of high glass cullet rate can be used. The glass cullet rate indicates a proportion of glass cullet in a glass material. Since the refining agent loses its refining ability when once molten, the glass cullet does not contain the refining agent. Use of a glass material of high glass cullet rate is preferred in terms of saving energy and recycling of glass cullet. As a refining agent, sulfate ($Na_2SO_4$) is often loaded. However, in the present invention, since no sulfate ($Na_2SO_4$) is loaded as a refining agent, molten glass with lessened sulfur (S) content can be produced. Further, it is possible to reduce the concentration of sulfur oxide ($SO_x$) in exhaust gas.

Further, in the present invention, the temperature of molten glass in the melting tank can be lowered in comparison with a case of using the conventional molten glass producing apparatus in which the molten glass is refined by circulating it in the refining area formed in the melting tank, hence, the energy consumed at the time of producing the molten glass can further be reduced.

In addition, the lowered temperature of the molten glass in the melting tank can control the vaporization of the glass components. Selenium as a premium material is sometimes employed as a coloring component to glass. In this case, since the molten glass contains a large amount of evaporation, it is necessary to put in the glass material a fairly large amount of selenium to the selenium content in the finally produced glass article. In the present invention, since the temperature of the molten glass in the melting tank can be lowered, the vaporization of selenium from the molten glass can be controlled.

## BRIEF DESCRIPTION OF THE DRAWINGS

Fig. 1 is a plan view of the molten glass producing apparatus according to an embodiment of the present invention.
Fig. 2 is a longitudinal cross-sectional view of the molten glass producing apparatus shown in Fig. 1.
Fig. 3 is a flowchart of an embodiment of the method for producing a glass article according to the present invention.

## BEST MODE FOR CARRYING OUT THE INVENTION

In the following, the present invention will be described with reference to drawings.

The molten glass producing apparatus of the present invention comprises a melting tank for melting a glass material and homogenizing and refining the molten glass, a vacuum degassing apparatus in which the inner pressure is set to be less than atmospheric pressure so that bubbles in the molten glass supplied from a melting tank are raised and broken, a first conduit structure for connecting the melting tank to the vacuum degassing apparatus and a second conduit structure disposed at a downstream side of the vacuum degassing apparatus to introduce the molten glass to a forming means.

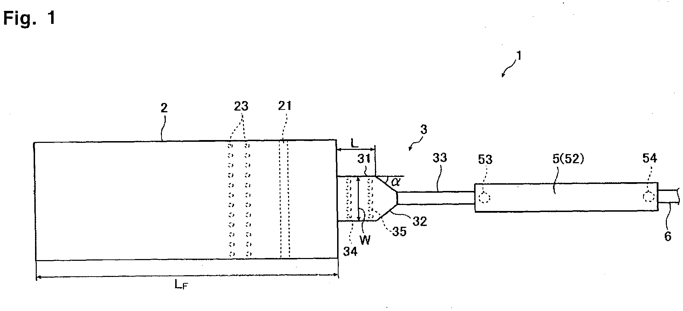

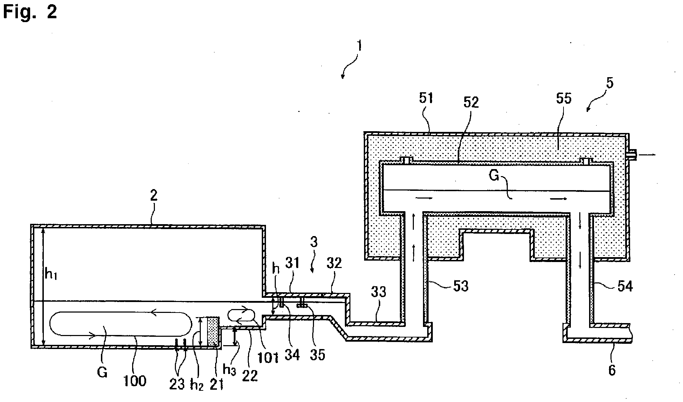

Fig. 1 is a plan view of the molten glass producing apparatus according to an embodiment of the present invention and Fig. 2 is a longitudinal cross-sectional view of the molten glass producing apparatus shown in Fig. 1.

In Figs. 1 and 2, a melting tank 2, a vacuum degassing apparatus 5 (including an uprising pipe 53, a vacuum degassing vessel 52 and a downfalling pipe 54), a first conduit structure 3 for connecting the melting tank 2 to the vacuum degassing apparatus 5 and a second conduit structure 6 disposed at a downstream side of the vacuum degassing apparatus 5 to introduce the molten glass to a forming means are shown as constituent elements of the molten glass producing apparatus 1 of the present invention. In the molten glass producing apparatus of the present invention, the melting tank 2 for melting a glass material preferably has such structure as described below. However, the structure of the melting tank 2 described below is not essential for the molten glass producing apparatus of the present invention.

The melting tank 2 shown in Figs. 1 and 2 is an open-structured melting tank. In the bottom plane of the melting tank 2 for providing a molten glass flow path, a dam wall 21 is formed as a separating means so as to project over the width direction of the flow path.

The provision of the dam wall 21 is to separate the circulation flow of molten glass in the melting tank 2 into an upstream circulation flow 100 and a downstream circulation flow 101.

When the height of the molten glass flow path at an upstream side of the dam wall 21 in the flowing direction of molten glass is represented as $h_1$, the height $h_2$ of the dam wall 21 (the height from the bottom of the molten glass flow path at an upstream side of the dam wall in the flowing direction of molten glass to the upper end of the dam wall) is preferably from $0.1 h_1$ to $0.3 h_1$ from the standpoint of the function to separate the molten glass flow into an upstream circulation flow and a downstream circulation flow. As described before, the height of the molten glass flow path does not indicate the height (the depth) of the molten glass itself, but indicates the height of the inner space of the melting tank for melting molten glass.

The height $h_2$ of the dam wall 21 is preferably from $0.11 h_1$ to $0.28 h_1$, more preferably, from $0.12 h_1$ to $0.26 h_1$.

In a typical melting tank, the height (the depth) of molten glass itself is preferably from 1/2 to 1/15 times of the height $h_1$ of the molten glass flow path. The height (the depth) of molten glass itself is such an extent of adding a value in a range of 50 to 1,000 mm to the height $h_2$ of the dam wall 21.

The reason of separating the circulation flow of molten glass in the melting tank 2 into the upstream circulation flow 100 and the downstream circulation flow 101 is to homogenize and refine the molten glass by forming these circulation flows. Specifically, the formation of the upstream circulation flow 100 effects the melting of a glass material and an initial homogenization of molten glass, and the formation of the downstream circulation flow effects refining and homogenization of the molten glass. Further, the formation of the upstream circulation flow 100 can remove foreign matters in the molten glass. The formation of two circulation flows: the upstream circulation flow and the downstream circulation flow has conventionally been carried out as described in Patent Document 2.

In the conventional molten glass producing apparatus, it was necessary to homogenize the molten glass and reduce the amount of bubbles in the molten glass, to a negligible level by homogenization and refining in the melting tank, specifically, by homogenization and refining by the downstream circulation flow. For this, it was necessary to remain the molten glass for a certain time in the melting tank, specifically, in the refining area of melting tank where the downstream circulation flow was formed. In the conventional melting tank as the melting tank shown in the Figure of Patent Document 2, the refining area where the downstream circulation.flow was formed was so designed as to prolong the length of the refining area.

On the other hand, in the molten glass producing apparatus 1 of the present invention, the refining of molten glass is mainly performed by vacuum-degassing in the vacuum degassing apparatus 5 provided at a downstream side whereby the length of an area of the melting tank in which the downstream circulation flow 101 is formed, can be shorter than that of the conventional melting tank.

In order to carry out effectively vacuum-degassing, however, it is necessary to make the molten glass supplied to the vacuum degassing apparatus 5 have such a level that the temperature and the amount of bubbles of the molten glass are subjected easily to vacuum-degassing, in addition to the homogenization of the molten glass. The amount of bubbles of the molten glass varies depending on the largest bubble diameter permissible. Further, it varies depending on purposes of glass articles and another required condition. Accordingly, when an article of soda lime glass for buildings is produced, and the molten glass flowing downward from the upstream circulation flow 100 contains bubbles at n number/kg, each bubble having at least the prescribed diameter, it is necessary to reduce the amount of bubbles having the at least the prescribed diameter in the molten glass to not more than n/1000 when the molten glass flown from the melting tank in the conventional molten glass producing apparatus without a vacuum degassing apparatus. Further, in the molten glass producing apparatus 1 of the present invention, since the length of the area in the melting tank 2 where the downstream circulation flow 101 is formed can be shorter than that of the conventional melting tank, the temperature of the molten glass flowing from the melting tank can be too high to introduce it into the vacuum degassing vessel 52.

Accordingly, even in the molten glass producing apparatus 1 of the present invention, it is necessary to form the downstream circulation flow 101 in the melting tank 2 to refine the molten glass and reduce the amount of bubbles in the molten glass whereby the molten glass is homogenized. In the molten glass producing apparatus 1 of the present invention, there are the vacuum degassing apparatus 5 and wide portions 31, 32 formed in the first conduit structure 3 connecting the melting tank 2 to the vacuum degassing apparatus 5 so as to homogenize the molten glass and adjust effectively the temperature of the molten glass to a level suitable for vacuum-degassing. Therefore, the downstream circulation flow 101 effects merely homogenization and refining and it is unnecessary for the circulation flow to effect the homogenization, the amount of bubbles and the temperature of molten glass to be a level suitable for vacuum-degassing. When an article of soda lime glass for buildings is produced with use of the molten glass producing apparatus 1 of the present invention, it is sufficient that the amount of bubbles having the largest diameter permissible in the molten glass flowing from the melting tank 2 is reduced to about n/10 due to refining by the downstream circulation flow 101.

As described above, in the molten glass producing apparatus 1 of the present invention, since the molten glass is refined by vacuum-degassing in the vacuum degassing apparatus 5 provided at a downstream side, the length of the area of the melting tank 2 where the downstream circulation flow 101 is formed, can be shorter than that the conventional melting tank. Accordingly, in the molten glass producing apparatus of the present invention, the entire length of the melting tank 2 can be shortened. In the molten glass producing apparatus of the present invention, when the length of the molten glass flow path in the melting tank 2 is represented by $L_F$, it is necessary that the distance from the dam wall 21 as a separating means in the melting tank 2 to the downstream end is from 0.1 $L_F$ to 0.45 $L_F$. When the distance from the dam wall 21 of the melting tank 2 to the downstream end is smaller than 0.1 $L_F$, no substantial refining and homogenization to the molten glass flowing from the melting tank 2 are obtainable. When the distance from the dam wall 21 of the melting tank 2 to the downstream end is larger than 0.45 $L_F$, it is difficult to reduce substantially the consumption energy in the melting tank 2 at the time of producing the molten glass.

The distance from the dam wall 21 of the melting tank 2 to the downstream end is preferably from 0.12 $L_F$ to 0.4 $L_F$, more preferably from 0.13 $L_F$ to 0.35 $L_F$, further preferably from 0.14 $L_F$ to 0.3 $L_F$.

As described above, the purpose of the upstream circulation flow 100 in the melting tank 2 is to fusing a glass material, to obtain the initial homogenization of molten glass and to remove foreign matters in the molten glass, like the conventional melting tank. Accordingly, the length of the area for forming the upstream circulation flow 100 in the melting tank 2, namely, the area at an upstream side from the dam wall 21 in the flowing direction of molten glass in the molten glass flow path of the melting tank 2 has preferably the same length as the conventional melting tank.

In the molten glass producing apparatus of the present invention, since the entire length of the melting tank 2, in particular, the length of the area at the downstream side of the dam wall 21 in the flowing direction of molten glass is made shorter, the energy needed to maintain the melting tank to a predetermined temperature at the time of producing molten glass can be reduced whereby saving energy in producing molten glass can be achieved.

By shortening the entire length of the melting tank 2, the time of discharging the molten glass having different description in the tank 2 in a case of changing the description of glass can be shortened to thereby improve productive efficiency. Such measures reduce a useless energy and contribute to save energy.

As described above, description has been made exclusively as to the case of using the dam wall 21 as a separating means. However, the same effect can be obtained when a bubble generator is used auxiliarilly in addition to the dam wall 21, or when a bubble generator is used solely as a separating means. It is preferred that the bubble generator is so formed that discharge ports are located near the bottom of the molten glass flow path wherein the discharge ports are arranged in the direction of the width of the melting tank 2, specifically, they are arranged over the direction of width of the molten glass flow path of the melting tank 2.

The dimensions of the melting tank 2 are determined depending on the scale of the molten glass producing apparatus. In a case of a molten glass producing apparatus having an output of 100 to 1,000 toms/day for instance, concrete examples of the dimensions of the melting tank 2 are as follows.

Length of molten glass flow path: 5-50 m, more preferably, 10-45 m, further preferably, 15-40 m.

Length of molten glass flow path at upstream side of dam wall 21 in the flowing direction of molten glass: 3-45 m, more preferably, 5-40 m, further preferably 10-35 m.

Length of molten glass flow path at downstream side of dam wall 21 in flowing direction of molten glass: 1-22.5 m, more preferably, 1.5-22.5 m, further preferably, 2-20 m.

Width of molten glass flow path: 5-20 m, more preferably 7-15 m, further preferably 8-12 m.

Height of molten glass flow path (at upstream side of dam wall 21 in flowing direction of molten glass) $h_1$: 1.5-9 m, more preferably 1.7-8.8 m, further preferably 1.8-8.5 m.

When only the bubble generator serves as a separating means, it can be located at a position corresponding substantially to the position of the dam wall.

The melting tank 2 shown in Fig. 2 assumes a stepped bottom structure 22 that the bottom of the molten glass flow path at a downstream side of the dam wall in the flowing direction of molten glass is higher than the bottom of the molten glass flow path at an upstream side of the dam wall in the flowing direction of molten glass.

As described before, at a downstream side of the dam wall 21 in the flowing direction of molten glass in the melting tank 2, the refining and homogenization of molten glass are effected by forming the downstream circulation flow 101. The refining of the molten glass is to remove the bubbles in the molten glass by raising and breaking them. Accordingly, as the depth of the molten glass flow path is smaller, the refining takes place easily. As shown in Fig. 2, when the melting tank 2 assumes the stepped bottom structure 22 at a downstream side of the dam wall 21 in the flowing direction of molten glass, the depth of the molten glass flow path in a portion where the downstream circulation flow 101 is formed, can be made small whereby the refining of the molten glass can be improved. For this, it is preferred that the melting tank 2 has a stepped bottom structure.

In a case that a stepped bottom structure is provided in the melting tank 2, it is preferred to satisfy following formulas

$$h_3 < h_2 \qquad (1)$$

$$0 < h_3 \leqq 0.6 h_2 \qquad (2)$$

where $h_1$ (mm) represents the height of the molten glass flow path at an upstream side of the dam wall 21 in the flowing direction of molten glass, $h_2$ (mm) represents the height from the bottom of the molten glass flow path at an upstream side of the dam wall 21 in the flowing direction of molten glass to the upper end of the dam wall 21, and $h_3$ (mm) represents the height from the bottom of the molten glass flow path at an upstream side of the dam wall 21 in the flowing direction of molten glass to the bottom of the molten glass flow path at a downstream side of the dam wall 21 in the flowing direction of molten glass.

Here, the height $h_1$ of the molten glass flow path does not indicate the height (the depth) of the molten glass itself, but indicates the height of the inner space from the bottom of the melting tank for melting the molten glass to the upper part. When the upper wall of the melting tank does not have a flat plane, the height indicates the height to the uppermost portion of the molten glass flow path. The height (the depth) of the molten glass itself takes generally a value obtained by subtracting a value of from 1 to 8 m from the height of the molten glass flow path. The reason that it is preferred to satisfy formula (1) is as follows. When the height of the dam wall 21 is larger than the level of the bottom of the stepped bottoms structure 22, the dam wall 21 preferably serves separating the molten glass flow into the upstream circulation flow 100 and the downstream circulation flow 101. Further, the reason that it is preferred to satisfy formula (2) is that the height of the bottom of the stepped bottom structure satisfying formula (2) is suitable for refining. Further, h3 is preferably $0 < h_3 \leqq 0.15 h_1$, more preferably $0 < h_3 \leqq 0.10 h_1$.

In the melting tank 2 shown in Figs. 1 and 2, bubble generators 23 are provided at an upstream side of the dam wall 21 in the flowing direction of molten glass so that their discharge ports are located near the bottom of the molten glass flow path. The bubble generators 23 produce an upstream circulation flow 100 to accelerate homogenization to the molten glass. In order to obtain the above-mentioned effect by the bubble generators 23 more effectively, it is preferred that the distance between the bubble generators 23 and the dam wall 21 in the flowing direction of molten glass is at least 500 mm. If the distance between the dam wall 21 and the bubble generators 23 is smaller, there is a high possibility that the dam wall 21 is eroded by the bubbles from the bubble generators 23. Accordingly, the distance between the bubble generators 23 and the dam wall 21 in the flowing direction of molten glass is preferably at least 2,000 mm, more preferably at least 3,000 mm. When the bubble generators 23 are to be provided, it is preferred that the bubble generators 23 are disposed so that the discharge ports are arranged in the width direction of the melting tank 2, specifically, in the width direction of the molten glass flow path in the melting tank 2, as shown in Fig. 1. In the melting tank 2 shown in Figs. 1 and 2, two groups of bubble generators 23 are provided opposing the flowing direction of molten glass so that the discharge ports are arranged over the width direction of the molten glass flow path in the melting tank 2. Other than this structure, one group or three groups or more of bubble generators 23 may be provided opposing the flowing direction of molten glass, for example. However, when another bubble generator is employed as a separating means in addition to the bubble generators 23, the bubble generators 23 should be disposed at a position that bubbles emitted from the bubble generators 23 do not hamper the separation of the upstream circulation flow 100 from the downstream circulation flow 101.

The melting tank 2 and the structural members such as the dam wall 21, the bubble generator 23 or the like provided in the melting tank 2 should have excellent heat resisting properties and excellent anticorrosive properties to the molten glass. Materials satisfying these requirements may be fire resistant brick such as fused refractory, platinum or a platinum alloy such as platinum-rhodium alloy.

The molten glass flowing from the melting tank 2 moves to wide portions 31, 32 which constitute parts of the first conduit structure connecting the melting tank 2 to the vacuum degassing apparatus 5 and have widths broader than the width of the melting tank at a downstream side in the flowing direction of molten glass. Since the wide portions 31, 32 have broader widths than a narrow portion 33 which communicates the molten glass flow path to the vacuum degassing apparatus 5, the homogenization of the molten glass composition can effectively be performed when the molten glass passes through the wide portions 31 and 32 whereby the homogenization of the molten glass as well as the amount of bubbles in the molten glass can be brought to a level suitable for vacuum-degassing. The wide portion 32 constitutes a part of wide portion and a connecting portion connects the wide portion 31 to the narrow portion 33.

Further, the wide portions 31, 32 serve to adjust the temperature of the molten glass passing through the wide portions 31, 32 to a temperature suitable for vacuum-degassing. As described above, when the article of soda lime glass for buildings, vehicles or the like is produced, the temperature of the molten glass flowing from the melting tank 2 is from 1,200 to 1,600°C. On the other hand, it is necessary that the temperature of the molten glass is from 1,000 to 1,400°C in order to obtain effectively the vacuum-degassing operation. In the molten glass producing apparatus 1 of the present invention, since the wide portions 31, 32 are provided, the temperature of the molten glass flowing from the melting tank 2 can be adjusted to a temperature suitable for vacuum-degassing.

In order to adjust effectively the temperature of the molten glass, homogenization of the glass composition and equalization of the temperature of the molten glass in the wide portions 31, 32, it is preferred that these wide portions 31, 32 satisfy the following formulae (3) and (4):

$$0.2 \leq W/L \leq 1.5 \qquad (3)$$

$$500 \leq h \leq 5000 \qquad (4)$$

In the formulae (3) and (4), W represents the largest width (mm) of the molten glass flow path, h represents the height (mm) of the molten glass flow path in the portion in which a width of the molten glass flow path takes the largest width W, and L represents the length (mm) of the portion where a width of the molten glass flow path in the wide portions takes the largest width W.

The height h of the molten glass flow path does not indicate the height (the depth) of the molten glass itself, but indicates the height of the inner space from the bottom of the wide portions to the upper part. The depth (the height) of the molten glass flow itself in these portions is about 0.2 h to 1 h in terms of the height h of the molten glass flow path, and the upper plane of the molten glass flow itself from the melting tank 2 may contact with a gas phase at the free surface (liquid plane) or may contact with the wall member at the upper part of the molten glass flow path. It is preferred that the distance from the liquid plane of the molten glass to the upper portion of the flow path is larger than 0.3 m and smaller than 3 m, more preferably larger than 0.4 m and smaller than 2.5 m, further preferably larger than 0.5 m and smaller than 2.0 m. Further, it is preferred that the height of the molten glass itself in the molten glass flow path in the wide portions 31, 32 is lower than the height of the molten glass itself at a downstream side of the dam wall 21 in the melting tank 2. The reason that the wide portions 31, 32 should satisfy the above-mentioned formulae (3) and (4) is as follows.

As described above, the wide portions 31, 32 function to make the homogenization and the temperature of the molten glass adjustable for carrying out the vacuum-degassing. For this, it is necessary to stagnate to some extent the molten glass in the wide portions 31, 32. In order to prolong a time of stagnation of the molten glass in a molten glass conduit structure such as wide portions 31, 32, it is considered that the volume of the conduit structure is increased. To increase the volume of the molten glass conduit structure like the wide portions 31, 32 disposed in a horizontal direction, at least one element of the width, the height and the length of the conduit structure should be increased. However, when the length of the conduit structure is increased, the pressure loss of the molten glass passing through the conduit structure will increase. When the height of the conduit structure is increased, the homogenization of the molten glass and the equalization of the temperature will decrease undesirably. Further, when the height of the conduit structure is increased, there is a possibility that a circulation flow of molten glass takes place in the conduit structure. When a circulation flow of molten glass takes place, there is a possibility that the molten glass of low temperature enters into the melting tank 2 undesirably. From the reason described above, the molten glass producing apparatus of the present invention is provided with the wide portions 31, 32 in which the width of the conduit structure is increased at an upstream side of first conduit structure 3 in the flowing direction of molten glass, whereby the above-mentioned functions can be achieved.

It is preferable that in the wide portions 31, 32, the proportion W/L of the largest W of molten glass flow path to the length L of the portion where a width of the molten glass flow path takes the largest width is from 0.2 to 1.5 in order to assure a sufficient remaining time to achieve the above-mentioned functions and to reduce distribution of temperature in the width direction or the flow resistance of molten glass.

In the wide portions 31, 32, W/L is preferably from 0.25 to 1.45, more preferably 0.3 to 1.4 and further preferably 0.35 to 1.35.

In the wide portions 31, 32, the height h of the molten glass flow path in the portion where a width of the molten glass flow path takes the largest width W is preferably from 500 to 5,000 mm from viewpoints of assuring the homogenization of the molten glass, avoiding a circulation flow of molten glass in the wide portions 31, 32 and suppressing the corrosion of the flow path by molten glass or the pressure loss of molten glass.

The height h of the molten glass flow path of the portion where a width of the molten glass flow path takes the largest width W in the wide portions 31, 32 is preferably from 550 to 4,000 mm, more preferably 600 to 3,500 mm, further preferably 650 to 3,000 mm.

The largest width W may be larger than the width of the melting tank 2. However, it is preferable that the largest width is smaller than the width of the melting tank 2 taking account of the structure of the molten glass flow path in the wide portions 31, 32 and the way of constructing it. Specifically, the largest width W of the molten glass flow path is from 2,000 to 12,000 mm, more preferably 2,500 to 10,000 mm, further preferably 3,000 to 8,000 mm.

In order to achieve the above-mentioned functions, it is preferable that in the wide portions 31, 32, the portion where a width of the molten glass flow path takes the largest width W has a length (a distance) to some extent. Specifically, the length L of the portion where a width of the molten glass flow path takes the largest width W is preferably from 1,000 to 20,000 mm, more preferably 1,500 to 15,000 mm, further preferably 2,000 to 10,000 mm. However, it is not always necessary that the width of the molten glass flow path takes the largest width W within the above-mentioned ranges of length but the width of the molten glass flow path may be varied to some extent within the ranges of length as above-mentioned.

In the wide portion 31 shown in Figs. 1 and 2, a cooling means 34 is disposed to cool the molten glass passing through the wide portion 31. Figs. 1 and 2 show that the cooling means 34 is disposed in the wide portion 31. However, it may be disposed in the wide portion 32 or both the wide portions 31 and 32. As described before, the wide portions 31, 32 function to make the temperature of the molten glass adjustable for vacuum-degassing. The cooling means 34 is disposed in the wide portions 31, 32 so that the wide portions 31, 32 perform effectively this function.

In Figs. 1 and 2, the cooling means 34 is a tubular member made of platinum, a platinum alloy or steel and it is inserted vertically into the molten glass in the wide portions 31 or 32 so that the molten glass is cooled by feeding cooling water in the interior of the tubular member. The material of the cooling means may be steel since its interior has a cooling function.

In the case of providing cooling means 34 in the wide portion 31 or 32 in the manner as illustrated in the Figures, it is preferable that they are arranged so that the depth of immersion in the molten glass in the wide portion 31, 32 is from 20 to 1,000 mm from viewpoints that they achieve excellent effect to cool the molten glass in the wide portion 31, 32 and they prevent effectively the occurrence of a circulation flow of molten glass in the wide portion 31, 32. It is further preferable that the cooling means 34 are arranged so that the depth of immersion into the molten glass in the wide portion 31, 32 is from 60 to 800 mm, and it is further preferable that they are arranged so that the depth of immersion into the molten glass is from 100 to 600 mm.

In the case of providing the cooling means 34 in the wide portion 31 or 32 in the manner as illustrated in the Figures, the number of cooling means usable is not in particular limited and a single cooling means may be employed. However, it is preferred that as shown in Fig. 1, a plurality of cooling means 34 are arranged in the width direction of the wide portion 31 or 32 because distribution of temperature does not takes place in the molten glass passing through the wide portion 31, 32.

In Figs. 1 and 2, the cooling means 34 are inserted vertically from the upper part of the wide portion 31 so that they are immersed in the molten glass. However, the way of arrangement of the cooling means 34 is not limited to this, but the cooling means 34 may be arranged horizontally toward the width direction of the wide portion 31 or 32, for example. In this case, it is possible to locate a single cooling means 34 so as to extend in the width direction of the wide portion 31, 32. Even in the case of locating horizontally the cooling means 34, it is preferable that the depth of immersion of the cooling means in the molten glass is within the above-mentioned range.

Figs. 1 and 2 show that a group of cooling means 34 arranged over the width direction of the wide portion 31 are in a line with respect to the flowing direction of molten glass. However, the arrangement is not limited to this, but a group of cooling means 34 may be arranged in two or more lines with respect to the flowing direction of molten glass, for example. When two or more lines of cooling means are arranged in the flowing direction of molten glass, the depth of immersion of the cooling means in the molten glass may be changed for each line. For example, a line at an upstream side in the flowing direction of molten glass may be at a deeper position of depth of immersion in the molten glass so that the occurrence of a circular flow of molten glass in the wide portion 31, 32 is suppressed. By taking such measures, the cooling means 34 can serve as means for preventing the backflow of molten glass in the wide portion 31, 32.

In the wide portion 31 shown in Figs. 1 and 2, agitating means 35 are provided to agitate the molten glass passing through the wide portion 31. In Figs. 1 and 2, the agitating means are provided in the wide portion 31. However, they may be provided in the wide portion 32. Since the cooling means 34 are provided in the wide portion 31 or 32, there is a possibility that the homogenization of the molten glass in the wide portion 31, 32 decreases, in particular, equalization of viscosity may decrease due to a temperature fall. For instance, distribution of temperature may take place between the surface and the bottom of the molten glass in the wide portion 31, 32 to reduce the homogenization of the molten glass. Such distribution of temperature of the molten glass can be eliminated by providing the agitating means 35 in the wide portion 31, 32 whereby a reduction of homogenization of the molten glass can be suppressed. The agitating means may be chosen widely from known means usable for agitating molten glass. When the agitating means 35 are provided in the wide portion 31, 32 for performing the above-mentioned effect, it is preferable that they are provided at a downstream side of the cooling means 34.

When the agitating means 35 are provided in the wide portion 31 as shown in Figs. 1 and 2, the number of agitating means usable is not in particular limited and a single agitating means is possible. However, the arrangement of a plurality of agitating means 35 traversing the width direction of the wide portion 31, 32 is preferred as shown in Fig. 1 because distribution of temperature of the molten glass can be avoided and the effect of controlling a reduction of homogenization of the molten glass is achieved. Further, a group of agitating means 35 are arranged in a line over the width direction in the flowing direction of molten glass as shown in Figs. 1 and 2. However, the arrangement is not limited to this, but agitating means 35 may be arranged in two or more lines in the flowing direction of molten glass, for example.

The wide portion (the connecting portion) 32 shown in Fig. 1 has a narrowed width at its downstream side because it is connected to a narrow portion 33 of the first conduit structure 3, the width of which being narrower than the wide portion 31. The structure of the wide portion (the connecting portion) 32 having a narrow width at its downstream side as shown in Fig. 1 is preferable because a stagnant portion of molten glass does not take place at the downstream side of the wide portion 31. However, when the angle $\alpha$ of the portion having a narrow width in the wide portion (the connecting portion) 32 is too large, there causes a problem of pressure loss (a flow resistance) in the molten glass passing therethrough. Accordingly, the angle $\alpha$ is preferably from 10 to 60°, more preferably 20 to 50°, further preferably 30 to 45°.

The proportion of the total length of the wide portions 31 and 32 located at an upstream side in the first conduit structure to the length of the entirety of first conduit structure is preferably from 0.3 to 0.95, more preferably 0.4 to 0.9, and further preferably 0.5 to 0.85 whereby the wide portions 31, 32 can perform the above-mentioned function.

The wide portions 31, 32 are required to have excellent heat-resisting property and excellent anticorrosive property to the molten glass in the same manner as the melting tank 2. As materials fulfilling this, fire resistant brick such as fused refractory, platinum or a platinum alloy such as a platinum-rhodium alloy can be used.

In the molten glass producing apparatus 1 shown in Fig. 1, molten glass passing through the wide portions 31, 32 is supplied to the vacuum degassing apparatus 5 via the narrow portion 33 located at a downstream side in the first conduit structure 3.

Although the detail will be described later, but briefly, the vacuum degassing apparatus 5 shown in Fig. 1 is adapted to siphon the molten glass in the first conduit structure 3 to introduce into the vacuum degassing vessel 52 by a siphoning action caused by maintaining the inner pressure of the vacuum degassing vessel 52 to be lower than the atmospheric pressure, and therefore, it is necessary that the vacuum degassing vessel 52 and the interiors of uprising pipe 53 and downfalling pipe 54 connected to the vacuum degassing vessel 52 are maintained under a decompressurized environment sufficient to perform the siphoning action. Accordingly, lower ends of uprising pipe 53 and downfalling pipe 54 should be lower than the level of the free surface of the molten glass in the first and second conduit structures 3, 6 to which these pipes are connected respectively. In the molten glass producing apparatus shown in Fig. 1, the connecting portion of the narrow portion 33 to the wide portion 32 is located at a higher position than the connecting portion of the narrow portion 33 to the uprising pipe 53. Such structure is called a throat structure. Accordingly, the lower end of uprising pipe 53 is lower than the level of the free surface of the molten glass in the wide portions 31, 32. Thus, it is preferable that in the molten glass producing apparatus 1, the molten glass flow path in the narrow portion 33 located at a downstream side of the wide portions 31, 32 in the flowing direction of molten glass is provided at a lower position than the molten glass flow path of the wide portions 31, 32. The second conduit structure 6 also has a throat structure though it is not shown in the Figure. Namely, the connection to the downfalling pipe 54 is lower than the other side of the conduit structure 6, i.e. a downstream side in the flowing direction of molten glass.

When molten glass passes through the narrow portion 33 at a downstream side of the wide portions 31, 32, there is a possibility that distribution of temperature takes place depending on positions of the molten glass. For example, the temperature of the molten glass at the bottom of the narrow portion 33 may be lower than that of the molten glass at a surface side. Such uneven temperature affects adversely the homogenization of the molten glass. For this, it is preferable to provide means for heating the molten glass passing through a portion at a downstream side of the wide portions 31, 32 in the flowing direction of molten glass. When a heating means is to be provided, there is in particular no limitation in choosing types, but the same type of heating means for heating glass in the melting tank may be used. Namely, means for heating molten glass by burning fuel, means for heating molten glass by using electricity or the like may be used.

The narrow portion 33 is required to have excellent heat-resisting property and excellent anticorrosive property to molten glass in the same manner as those for the melting tank 2 and the wide portions 31, 32. As materials fulfilling these requirements, fire resistant brick such as fused refractory, platinum or a platinum alloy such as a platinum-rhodium alloy may be used.

The dimensions of the narrow portion 33 are not in particular limited, but concrete examples of the dimensions are as follows.

Length in horizontal direction: preferably from 1 to 20 m, more preferably 1.2 to 10 m, further preferably 1.4 to 5 m

Width of inside in cross-section: preferably from 0.2 to 2 m, more preferably 0.3 to 1.6 m, further preferably 0.4 to 1.4 m.

Height of molten glass flow path: preferably from 0.1 to 3 m, more preferably 0.2 to 2 m, further preferably 0.3 to 1 m.

Difference of level of molten glass flow path: preferably from 0.2 to 2 m, more preferably 0.3 to 1.5 m, further preferably 0.4 to 1 m.

Further, the shape of the inside in cross section of the narrow portion 33 is not in particular limited, but it may be a polygonal shape such as a quadrangle or a circular or oval shape.

The vacuum degassing apparatus 5 is of metal, e.g. of stainless steel and is provided with a vacuum housing 51 (omitted in Fig. 1). When it is in use, the inside is maintained in a depressurized state. In the vacuum housing 51, the vacuum degassing vessel 52 is located with its long axis oriented horizontally. The lower plane at one end of the vacuum degassing vessel 52 is attached with the uprising pipe 53 extending vertically and the lower plane at the other end thereof is attached with the downfalling pipe 54. A heat insulating material 55 is disposed around the vacuum degassing vessel 52, the uprising pipe 53 and the downfalling pipe 54 in the vacuum housing 51.

The vacuum degassing vessel 52, the uprising pipe 53 and the downfalling pipe 54 of the vacuum degassing apparatus 5 are comprised of hollow tubes made of fire-resisting brick such as fused refractory, platinum or a platinum alloy.

When the vacuum degassing vessel 52 is a hollow tube of fire-resisting brick, the vacuum degassing vessel 52 is preferably a hollow tube of fire-resisting brick having a rectangular cross-sectional shape in outer configuration and the shape of the inside for providing the molten glass flow path has preferably a rectangular shape in cross section.

When the uprising pipe 53 and the downfalling pipe 54 are hollow tubes of fire-resisting brick, the uprising pipe 53 and the downfalling pipe 54 are hollow tubes of fire-resisting brick, their outer contours are circular shapes in cross section or a polygonal shapes in cross section including rectangular shapes, and the shapes of the inside for providing molten glass flow paths are preferably circular shapes in cross section. On the other hand, when the vacuum degassing vessel 52 is a hollow tube of platinum of a platinum alloy, it is preferable that the shape of the inside in cross section for providing the molten glass flow path in the vacuum degassing vessel 52 is circular of oval.

When the uprising pipe 53 and the downfalling pipe 54 are hollow tubes of platinum or a platinum alloy, it is preferable that the shapes of the inside in cross section for providing molten glass flow paths are circular or oval.

The dimensions of each structural element of the vacuum degassing apparatus can be chosen appropriately depending on a vacuum degassing apparatus used. However, when the vacuum degassing apparatus 5 shown in Fig. 1 is employed, concrete examples of the dimensions are as follows.

Length in horizontal direction: 1 to 30 m, preferably 1 to 25 and more preferably 1 to 20 m.

Width of inside in cross section: 0.2 to 10 m, preferably 0.2 to 7 and more preferably 0.2 to 5 m.

Concrete examples of the dimensions of the uprising pipe 53 and the downfalling pipe 54 are as follows.

Length: 0.2 to 6 m and preferably 0.4 to 5 m.

Width of inside in cross section: 0.05 to 0.8 m, preferably 0.1 to 0.6 m.

The vacuum degassing apparatus in the molten glass producing apparatus of the present invention is not limited to the structure shown in the Figure, but vacuum degassing apparatuses having various structures may be employed.

The amount of bubbles in the molten glass is reduced by vacuum-degassing in the vacuum degassing apparatus 5 to a prescribed level according to usage for a glass article to be produced, and the molten glass is supplied to a forming means (not shown) via the second conduit structure 6 so that it is formed into a glass article. The material, the shape and the dimensions of the second conduit structure 6 are the same as those described on the first conduit structure 3 (including the wide portions 31, 32 and the narrow portion 33).

For example, means for forming the molten glass into a sheet-like glass ribbon which is usable for a flat glass may be forming means employing a float method, a fusion method or a down-draw method. Among these, the forming means employing a float bath by a float method is preferred since it can produce in large scale flat glass of high quality having a wide range of thickness, from thin sheet glass to thick sheet glass. The amount of production of molten glass is preferably from 100 to 1,000 tons/day, more preferably from 300 to 800 tons/day, and further preferably from 350 to 700 tons/day in consideration of a change of descriptions of glass and accessory equipments.

The glass article producing apparatus of the present invention comprises the molten glass producing apparatus of the present invention as described above, a forming means for forming molten glass, disposed at a downstream side of a molten glass producing apparatus and an annealing means for cooling gradually the formed glass. The forming means has already been mentioned before. As the annealing means, an annealing furnace is generally employed, which is provided with a conveyer rollers as a conveying mechanism for the formed glass and a mechanism for decreasing gradually the temperature of the formed glass. The mechanism for decreasing gradually the temperature utilizes combustion gas or an electric heater which can control an amount of heat to be fed to necessary positions in the furnace whereby the formed glass is gradually cooled (annealed). Thus, a residual stress existing in the formed glass can be eliminated. However, the annealing means is not limited to the above-mentioned means if it can eliminate a residual stress existing in the formed glass.

Now, the molten glass producing method and the glass article producing method of the present invention will be described.

The molten glass producing method of the present invention produces molten glass by employing the above-mentioned molten glass producing apparatus of the present invention. According to the glass article producing method of the present invention, molten glass is produced by the above-mentioned molten glass producing apparatus of the present invention (a molten glass producing step); the molten glass is formed with a forming means (a forming step) and the formed glass is annealed with an annealing means (an annealing step), thus a glass article is produced. An individual step in the molten glass producing method and the glass article producing method according to the present invention will be described.

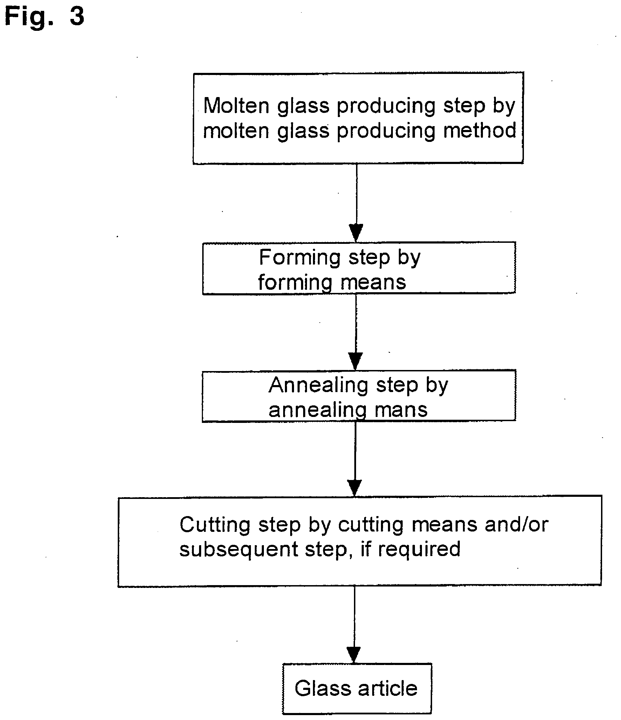

Fig. 3 is a flowchart of an example of the glass article producing method of the present invention. Fig. 3 shows the molten glass producing step, the forming step and the annealing step as constituent elements in the glass article producing method of the present invention and it shows additionally a cutting step and a subsequent step which may be employed if required.

A glass material formulated to have a desired composition is put into the melting tank 2 and it is heated to a predetermined temperature according to kinds of glass. For instance, in a case of soda lime glass for buildings, vehicles and so on, the glass material is heated to about 1,400 to 1,600°C to obtain molten glass.

When a glass material is to be molten, a mixture of air and fuel such as natural gas, or fuel oil, e.g. heavy oil or the like is used for combustion and the glass material is melted by heat of combustion thus obtained. It is preferred to burn a mixture of the fuel and oxygen to melt the glass material by the obtained heat of combustion, namely, to melt the glass material by the combustion of oxygen since it provides excellent efficiency of combustion and a reduction of energy consumed when the glass material is melted.

When a mixture of fuel and oxygen is burnt, amounts of water ($H_2O$) and carbon dioxide ($CO_2$) contained in the gas after the combustion are larger than those of the case that a mixture of fuel and air is burnt. A case of burning a mixture of natural gas and oxygen is taken as an example. The gas after the combustion contains about 3.5 times of water ($H_2O$) and carbon dioxide ($CO_2$) in comparison with the case that a mixture of natural gas and air is burnt. As a result, the atmosphere in the melting tank 2 contains about 3.5 times of water ($H_2O$) and carbon dioxide ($CO_2$) in comparison with the case that a mixture of natural gas and air is burnt, and accordingly, the molten glass in contact with such atmosphere contains about 3.5 times of water ($H_2O$) and carbon dioxide ($CO_2$) in comparison with the case that the mixture of natural gas and air is burnt. Water ($H_2O$) is effective for refining irrespective of kinds of glass, in particular, a vacuum degassing apparatus, and it serves as refining agent for molten glass usable for buildings, vehicles, containers or displays. Accordingly, when the molten glass for these purposes is produced, the glass material should be molten by heat of combustion of oxygen. Then, an improvement of refining to molten glass can be expected.

A refining agent may be incorporated into a glass material according to kinds of glass. However, since the refining to the molten glass is mainly performed by vacuum degassing in the molten glass producing method of the present invention, it is preferable not to incorporate the refining agent if it is not needful. For example, in a case of soda lime glass, sulfate ($Na_2SO_4$) is generally incorporated as refining agent. However, in the molten glass producing method of the present invention, it is preferable not to incorporate sulfate ($Na_2SO_4$) as refining agent in order to produce molten glass with lessened sulfate (S). Further, since no refining agent is employed, a glass material of high cullet rate can be used. Since the refining agent loses its refining ability when once molten, glass cullet does not contain the refining agent, and accordingly, there is no adverse effect even though the cullet rate is increased. Further, adverse effect to the environment can be reduced since the concentration of a sulfur oxide ($SO_X$) in exhaust gas can be reduced.

The formation of the upstream circulation flow 100 of the molten glass in the melting tank 2 accelerates the melting of glass material and initial homogenization to the molten glass. The formation of the downstream circulation flow 101 causes homogenization and refining whereby the degree of homogenization of the molten glass and the amount of bubbles in the molten glass can be reduced to desired levels. The amount of bubbles of the molten glass varies depending on the largest diameter of bubbles permissible and varies also usage of glass articles and conditions required. In the following, description will be made on the assumption that the molten glass flowing from the upper circulation flow 100 contains bubbles having a prescribed diameter or more at a rate of n number/kg.

When the molten glass flowing from the melting tank 2 passes through a downstream area of the dam wall 21, the amount of bubbles in the molten glass is reduced to a level suitable for vacuum degassing. In a case of soda lime glass for buildings, for instance, it is sufficient to reduce the amount of bubbles having the largest diameter or more permissible in the molten glass flowing from the melting tank 2, to about n/10. For instance, the temperature of molten soda lime glass for buildings is adjusted to 1,200 to 1,600°C.

In wide portions 31, 32, the homogenization and particularly, the temperature of the molten glass are adjusted, in addition to the amount of bubbles, to levels suitable for vacuum degassing, and then, it is supplied to the vacuum degassing apparatus 5 via the narrow portion 33. For example, when soda lime glass for buildings is melted, the temperature of the molten glass is adjusted to 1,000 to 1,400°C.

In the vacuum degassing apparatus 5, the vacuum housing 51 is vacuumized from its exterior with a vacuum pump whereby the interior of the vacuum degassing vessel 52 disposed in the vacuum housing 51 is maintained to a predetermined degree of vacuum according to kinds of glass to be produced. For soda lime glass for buildings, it is preferable that the inner pressure of the vacuum degassing vessel 52 is maintained to 0-613 hPa (0-460 mmHg), more preferably 10-337 hPa (8-253 mmHg).

By passing the molten glass into the vacuum degassing vessel 52 maintained at a predetermined degree of vacuum, the amount of bubbles in the molten glass is reduced to a predetermined level according to usage of a glass article. For instance, in the soda lime glass for buildings, the amount of bubbles having the largest diameter or more in the molten glass flowing from the vacuum degassing vessel 52 can be reduced to n/1,000 or lower.

The degree of vacuum of the inside of the vacuum degassing vessel 52 may be adjusted depending on the amount of bubbles in the molten glass in the vacuum degassing vessel 52.

Further, the amount of bubbles in the molten glass passing through the vacuum degassing vessel 52 may be measured with a bubble watching means to adjust the degree of vacuum in the vacuum degassing vessel 52 in response to a result of measurement of the amount of bubbles. For example, the amount of bubbles in the molten glass is watched with a camera as the bubble watching means, through a window (not shown) disposed at the ceiling of the vacuum degassing vessel 52 and the degree of vacuum in the vacuum degassing vessel 52 may be adjusted in response to a result obtained by image-processing. When the amount of bubbles watched is too much, the degree of vacuum be increased so as to enhance the refining. The amount of bubbles watched and the degree of vacuum can be determined appropriately depending on the composition of glass and quality to be required.

The molten glass refined in the vacuum degassing apparatus 5 is supplied through the second conduit structure 6 to the forming means to be formed (forming step). The formed glass is annealed by the annealing means so that there is no residual stress in the glass solidified after the formation (annealing step). The formed glass is cut (cutting step) and is subjected to a subsequent step (if they are needed) whereby a glass article is obtainable. In a case of flat glass, for example, a flat glass is produced by forming molten glass into a glass ribbon by the forming means, annealing it by the annealing means, cutting it into a predetermined size and conducting a post treatment such as grinding an end of the glass if needed.

With respect to the molten glass produced by the molten glass producing method of the present invention, there is no restriction in terms of composition as long as it is produced by a melting method employing heat. Accordingly, soda lime glass or non-alkali glass may be used, or a mixed alkali type glass such as alkali-borosilicate glass may be used. Further, the purpose of the glass article produced is not limited only for buildings or vehicles, but various purposes e.g. for a flat panel display or another article may be mentioned.

Soda lime glass useable for a flat glass for buildings or vehicles preferably has a composition which comprises $SiO_2$ : 65 to 75%, $Al_2O_3$ : 0 to 3%, CaO: 5 to 15%, MgO: 0 to 15%, $Na_2O$: 10 to 20%, $K_2O$: 0 to 3%, $Li_2O$: 0 to 5%, $Fe_2O_3$ : 0 to 3%, $TiO_2$ : 0 to 5%, $CeO_2$ : 0 to 3%, BaO: 0 to 5%, SrO: 0 to 5%, $B_2O_3$ : 0 to 5%, ZnO: 0 to 5%, $ZrO_2$ : 0 to 5%, $SnO_2$ : 0 to 3% and $SO_3$ : 0 to 0.5%, as represented by mass percentage based on oxides.

Non-alkali glass usable for a board for liquid crystal display preferably has a composition which comprises $SiO_2$ : 39 to 70%, $Al_2O_3$ : 3 to 25%, $B_2O$: 1 to 20%, MgO: 0 to 10%, CaO: 0 to 17%, SrO: 0 to 20% and BaO: 0 to 30%, as represented by mass percentage based on oxides.

A mixed alkali type glass usable for a board for plasma display preferably has a composition which comprises $SiO_2$: 50 to 75%, $Al_2O_3$: 0 to 15%, MgO+CaO+SrO+BaO+ZnO: 6 to 24% and $Na_2O+K_2O$: 6 to 24%, as represented by mass percentage based on oxides.

EXAMPLES

According to the structure of the molten glass producing apparatus shown in Figs. 1 and 2, an apparatus having a scale capable of producing about 500 tons/day was manufactured. With such apparatus, molten glass of soda lime glass was produced and further, flat glass was produced in a float bath. Then, the amount of energy consumed in producing the molten glass and amounts of bubbles in the produced molten glass and produced flat glass were compared with those produced by the conventional molten glass producing apparatus for flat glass in which the refining of the molten glass was mainly carried out in the refining area in the melting tank. In the apparatus of the present invention, an oxygen combustion system was employed. Further, the length from the upstream end of the melting tank to the front of the float bath including the vacuum degassing apparatus in the molten glass producing apparatus of the present invention is substantially the same as the length to the front of the float bath including the melting tank in the conventional molten glass producing apparatus for flat glass. Further, as to the amount of energy consumed in producing the molten glass, amounts of energy consumed in the area from the melting tank to the front of the float bath were compared.

In the comparison of molten glass producing apparatuses, main differences of dimensions in the flowing direction of molten glass of the producing apparatus of the present invention and the conventional producing apparatus are as follows.

PRODUCING APPARATUS OF PRESENT INVENTION

Length from upstream end of melting tank to front of float bath: $L_T$ (about 60 m)
Length from upstream end of melting tank to dam wall: 0.4 $L_T$
Length from dam wall of melting tank to downstream end: 0.1 $L_T$
(length $L_F$ of molten glass flow path of melting tank: 0.5 $L_T$)
Length from downstream end of melting tank to upstream end of vacuum degassing apparatus: 0.15 $L_T$
Length from upstream end of vacuum degassing apparatus to front of float bath: 0.35 $L_T$

CONVENTIONAL PRODUCING APPARATUS: WITHOUT VACUUM DEGASSING APPARATUS

Length from upstream end of melting tank to front of float bath: $L_T$
Length from upstream end of melting tank to dam wall: 0.4 $L_T$
Length from dam wall of melting tank to front of float bath: 0.6 $L_T$

The other specifications of the producing apparatus of the present invention are shown below.

MELTING TANK 2

HEAT-RESISTANT BRICKWARE

Height of molten glass flow path $h_1$ at upstream side of dam wall in flowing direction of molten glass: 4.5 m
Height $h_3$ from bottom of molten glass flow path at upstream side of dam wall in flowing direction of molten glass to bottom of molten glass flow path at downstream side of dam wall in flowing direction of molten glass: 0.5 m
Height (depth) of molten glass itself: 1.3 m

DAM WALL 21

HEAT-RESISTANT BRICKWARE

Height $h_2$ from bottom of molten glass flow path at upstream side of dam wall in flowing direction of molten glass to upper end of dam wall: 0.8 m
Height from upper end of dam wall to liquid plane of molten glass: 0.5 m

BUBBLE GENERATOR 23

PLATINUM WARE

Distance (upstream side) from dam wall in flowing direction of molten glass: 4.3 m
Distance (upstream side) from dam wall in flowing direction of molten glass: 3 m

WIDE PORTION 31, 32

HEAT-RESISTANT BRICKWARE

Largest width W of molten glass flow path: 4.1 m
Length L of portion having largest width in molten glass flow path: 5 m
Height h of molten glass flow path: 1.5 m
Length of molten glass flow path: 6.4 m
Height (depth) of molten glass itself: 0.5 m

NARROW PORTION 33

HEAT-RESISTANT BRICKWARE

Cross-sectional shape of inside: Rectangular
Width of molten glass flow path: 0.9 m
Length of molten glass flow path: 2.5 m
Depth of molten glass flow path: 0.5 m
Difference of level of molten glass flow path: 0.5 m

A heating means for heating molten glass is disposed in the narrow portion 33.

COOLING MEANS 34

STEEL WARE (WATER COOLING TYPE)

Distance from downstream end of melting tank in flowing direction of molten glass: 1 m
Depth of immersion in molten glass: 0.3 m

AGITATING MEANS 35

STEEL WARE (WATER COOLING TYPE)

Distance from downstream end of melting tank in flowing direction of molten glass: 3 m
Depth of immersion in molten glass: 0.3 m

UPRISING PIPE 53, DOWNFALLING PIPE 54

HEAT-RESISTANT BRICKWARE

Cross-sectional shape of inside: Circular
Length: 3 m
Width of inside in cross-sectional shape: 0.6 m

VACUUM DEGASSING VESSEL 52

HEAT-RESISTANT BRICKWARE

SECOND CONDUIT STRUCTURE 5

Substantially same as narrow portion 33 except for heating means

In the molten glass producing method producing about 500 tons/day, when the apparatus of the present invention is used, the length from the dam wall to the downstream end of melting tank in the flowing direction of molten glass is 1/6 in comparison with the conventional apparatus, as described above on these dimensions, and the consumption energy can be reduced to about 50% in conjunction with the advantage of employing the oxygen combustion system. This means that a reduction of about 30% has been achieved without applying the oxygen combustion and a reduction of about 25% has further been able to achieve by employing the oxygen combustion.

In this case, the temperature of molten glass was 1,550°C in the melting tank of the present invention and 1,600°C in the melting tank of the conventional molten glass producing apparatus. The consumed energy can further be reduced by improving heat insulation systems for the melting tank, the wide portion and the vacuum degassing apparatus.

The amount of bubbles having a diameter of 0.2 mm or more when the molten glass in the melting tank passed through the dam wall was about 100 to 1,000/kg, the amount of bubbles having the same size when the molten glass flowed from the melting tank was about 10 to 100/kg and the temperature of molten glass flowing from the melting tank was 1,450°C. The amount of bubbles of the molten glass in each step was measured by sampling molten glass and counting the number of bubbles in the samples. The molten glass was homogenized while it was passed through the wide portions 31, 32, and the temperature of the molten glass was adjusted to 1,350°C and the amount of bubbles having a diameter of 0.2 mm or more was about 10 to 100/kg, namely, there was no substantial change in comparison with that flowing from the melting tank. By maintaining the inner pressure of the vacuum degassing vessel to 0 to 0.2 hPa (0 to 152 mmHg), the amount of bubbles having a diameter of 0.2 mm or more in the molten glass was reduced to at most 0.1/kg. The amount of bubbles and the homogenization of the flat glass as a glass article obtained by forming the molten glass into a sheet-like glass ribbon in a float bath, annealing and cutting were identical with or better than those by the conventional molten glass producing apparatus.

INDUSTRIAL APPLICABILITY

The present invention is suitable for producing a glass article with good homogenization and high quality, with lessened bubbles, and is utilizable for producing a glass article for buildings, vehicles, flat panel displays and so on.

EXPLANATION OF NUMERALS

1: Molten glass producing apparatus
2: Melting tank

21: Dam wall (separating means)
22: Stepped bottom structure
23: Bubble generator

3: First conduit structure

31: Wide portion
32: Wide portion (connecting portion)
33: Narrow portion
34: Cooling means
35: Agitating means

5: Vacuum degassing apparatus

51: Vacuum housing
52: Vacuum degassing vessel

53: Uprising pipe
54: Downfalling pipe
55: Heat-insulating material

6: Second conduit structure
100: Upstream circular flow
101: Downstream circular flow

**Claims**

1. A molten glass producing apparatus (1) comprising a melting tank (2) for melting a glass material, a vacuum degassing apparatus (5) having an inner part maintained in a subatmospheric pressure so that bubbles in molten glass supplied from the melting tank are removed by raising and breaking them, a first conduit structure (3) connecting the melting tank (2) to the vacuum degassing apparatus (5), and a second conduit structure (6) disposed at a downstream side of the vacuum degassing apparatus (5) to introduce the molten glass to a forming means, the molten glass producing apparatus (1) being **characterized in that** the melting tank (2) is provided with a separating means for separating the area for circulating the molten glass in the melting tank (2) into an upstream circulation flow and a downstream circulation flow, the distance from the separating means to the downstream end of the molten glass flow path in the melting tank (2) is from 0.1 $L_F$ to 0.45 $L_F$ where $L_F$ represents the length of the molten glass flow path in the melting tank (2), a wide portion (31,32) is formed in the first conduit structure (3) at a upstream side in the flowing direction of molten glass, the width of the wide portion (31,32) being larger than another area of the first conduit structure (3), the wide portion (31,32) is provided with means for preventing the molten glass from back-flowing in the wide portion (31,32), the means for preventing the molten glass from back-flowing is a means (34) for cooling the molten glass passing through the wide portion (31,32) and is disposed in the wide portion (31,32), said cooling means (34) being inserted into molten glass so as to be immersed therein, and wherein the wide portion (31,32) satisfies the following formulae (3) and (4):

$$0.2 \leq W/L \leq 1.5 \qquad (3)$$

$$500 \leq h \leq 5000 \qquad (4)$$

wherein in the formulae (3) and (4), W represents the largest width(mm) of the molten glass flow path, h represents the height (mm) of the molten glass flow path in the portion in which a width of the molten glass flow path takes the largest width W, and L represents the length (mm) of the portion where a width of the molten glass flow path in the wide portions (31,32) takes the largest width W.

2. The molten glass producing apparatus (1) according to Claim 1, wherein in the wide portion (31,32), the largest width W (mm) of the molten glass flow path and the length L (mm) of the area that a width of the molten glass flow path in the wide portion (31,32) takes the largest width W satisfy the following formulas: $2000 \leq W \leq 12000$ and $1000 \leq L \leq 20000$.

3. The molten glass producing apparatus (1) according to Claim 1 or 2, wherein the wide portion (31,32) is provided with means (35) for agitating the molten glass passing through the wide portion.

4. The molten glass producing apparatus (1) according to any one of Claims 1 to 3 wherein the separating means is a dam wall (21) projecting from the bottom of the molten glass flow path in the melting tank (2), the dam wall (21) extending in a width direction of the molten glass flow path in the melting tank (2) wherein when the height of the molten glass flow path at an upstream side of the dam wall (21) in the flowing direction of molten glass in the melting tank (2) is represented by $h_1$, the height from the bottom of the molten glass flow path at an upstream side of the dam wall (21) in the flowing direction of molten glass to the upper end of the dam wall (21) is from 0.1 $h_1$ to 0.3 $h_1$.

5. The molten glass producing apparatus (1) according to Claim 4, wherein in the melting tank (2), the bottom of the molten glass flow path at a downstream side of the dam wall (21) in the flowing direction of molten glass is higher than the bottom of the molten glass flow path at an upstream side of the dam wall (21) in the flowing direction of molten glass.

6. The molten glass producing apparatus (1) according to Claim 5, wherein in the melting tank (2), when $h_1$ (mm) represents the height of the molten glass flow path at an upstream side of the dam wall (21) in the flowing direction of molten glass, $h_2$ (mm) represents the height from the bottom of the molten glass flow path at an upstream side of the dam wall (21) in the flowing direction of molten glass to the upper end of the dam wall (21), and $h_3$ (mm) represents the height from the bottom of the molten glass flow path at an upstream side of the dam wall (21) in the flowing direction of molten glass to the bottom of the molten glass flow path at a downstream side of the dam wall (21) in the flowing direction of molten glass, $h_1$, $h_2$ and $h_3$ satisfy the following formulas: $h_3<h_2$ and $0<h_3\leqq0.6h_2$

7. The molten glass producing apparatus (1) according to any one of Claims 4 to 6, wherein the melting tank (2) is provided with a bubble generator (23) having a discharge port located near the bottom of the molten glass flow path at an upstream side of the dam wall (21) in the flowing direction of molten glass, and the distance between the bubble generator (23) and the dam wall (21) in the flowing direction of the molten glass is at least 500 mm.

8. The molten glass producing apparatus (1) according to any one of Claims 1 to 3, wherein the separating means is bubble generators (23) having discharge ports located near the bottom of the molten glass flow path in the melting tank (2), the discharge ports being arranged in the width direction of the molten glass flow path.

9. The molten glass producing apparatus (1) according to any one of Claims 1 to 8, wherein means for heating the molten glass passing through the first conduit structure (3) at a downstream side of the wide portion (31,32) in the flowing direction of molten glass, are disposed.

10. The molten glass producing apparatus (1) according to any one of Claims 1 to 9, wherein the position of the molten glass flow path in the first conduit structure (3) at a downstream side of the wide portion (31,32) in the flowing direction of the molten glass is lower than the position of the molten glass flow path in the wide portion (31,32). '

11. A molten glass producing method employing a molten glass producing apparatus (1) described in any one of Claims 1 to 10.

12. The molten glass producing method according to Claim 11, wherein in the melting tank (2), a glass material is molten by heat of combustion of a mixture of fuel and oxygen.

13. The molten glass producing method according to Claim 11 or 12, wherein the amount of bubbles in the molten glass passing through the vacuum degassing vessel (52) of the vacuum degassing apparatus (5) is measured with a bubble inspecting means to adjust the degree of depressurization in the vacuum degassing vessel (52) in response to a result of measurement of bubbles.

14. The molten glass producing method according to any one of Claims 11 to 13, wherein the molten glass is molten glass of soda-lime glass.

15. An apparatus for producing a glass article which comprises a molten glass producing apparatus (1) described in any one of Claims 1 to 10, a forming means disposed at a downstream side of the molten glass producing apparatus (1) to form the molten glass and an annealing means for annealing the formed glass.

16. A method for producing a glass article which comprises a step of producing molten glass by a molten glass producing method described in any one of Claims 11 to 14, a step of forming the molten glass and a step of annealing the formed glass.

**Patentansprüche**

1. Vorrichtung zum Herstellen von geschmolzenem Glas (1), umfassend einen Schmelztank (2) zum Schmelzen eines Glasmaterials, eine Vakuumentgasungsvorrichtung (5) mit einem Innenteil, der unter Unterdruck gehalten wird, so dass Blasen in geschmolzenem Glas, zugeführt von dem Schmelztank, durch Aufsteigen und Brechen dieser entfernt werden, eine erste Leitungsstruktur (3), welche den Schmelztank (2) mit der Vakuumentgasungsvorrichtung (5) verbindet, und eine zweite Leitungsstruktur (6), angeordnet an einer stromabwärtigen Seite der Vakuumentgasungsvorrichtung (5), zum Einführen des geschmolzenen Gases zu einem Formungsmittel, wobei die Vorrichtung zum Herstellen von geschmolzenem Glas (1) **dadurch gekennzeichnet ist, daß** der Schmelztank (2) mit einem Abtrennmittel zum Abtrennen des Bereichs zum Zirkulieren des geschmolzenen Glases in dem Schmelztank (2) in einen stromaufwärtigen Zirkulationsstrom und einen stromabwärtigen Zirkulationsstrom bereitgestellt wird, wobei der Abstand von dem Abtrennmittel zu dem stromabwärtigen Ende der Fließstrecke des geschmolzenen Glases in dem Schmelztank (2) von 0,1 $L_F$ bis 0,45 $L_F$ beträgt, wobei $L_F$ die Länge der Fließstrecke des geschmolzenen Glases in dem Schmelztank (2) darstellt, ein breiter Abschnitt (31, 32) in der ersten Leitungsstruktur (3) an einer stromaufwärtigen Seite in der Fließrichtung des geschmolzenen Glases gebildet wird, wobei die Breite des breiten Abschnitts (31, 32) größer ist als ein anderer Bereich der ersten Leitungsstruktur (3), wobei der breite Abschnitt (31, 32) mit Mitteln zum Verhindern, dass das geschmolzene Glas in den breiten Abschnitt (31, 32) zurückfließt, versehen ist, wobei die Mittel zum Verhindern, dass das geschmolzene Glas zurückfließt, ein Mittel (34) zum Abkühlen des durch den breiten Abschnitt (31, 32) strömenden geschmolzenen Glases ist und in dem breiten Abschnitt (31, 32) angeordnet ist, wobei das Kühlmittel (34) in das geschmolzene Glas derart eingeführt ist, darin einzutauchen, und wobei der breite Abschnitt (31, 32) die folgenden Formeln (3) und (4) erfüllt:

$$0,2 \leq W/L \leq 1,5 \qquad (3)$$

$$500 \leq h \leq 5000 \qquad (4)$$

worin in den Formeln (3) und (4) W die größte Breite (mm) der Fließstrecke des geschmolzenen Glases darstellt, h die Höhe (mm) der Fließstrecke des geschmolzenen Glases in dem Abschnitt, worin eine Breite der Fließstrecke des geschmolzenen Glases die größte Breite W annimmt, entspricht und L der Länge (mm) des Abschnitts, bei welchem eine Breite der Fließstrecke des geschmolzenen Glases in den breiten Abschnitten (31, 32) die größte Breite W annimmt, entspricht.

2.  Vorrichtung zum Herstellen von geschmolzenem Glas (1) gemäß Anspruch 1, wobei in dem breiten Abschnitt (31, 32) die größte Breite W (mm) der Fließstrecke des geschmolzenen Glases und die Länge L (mm) des Bereiches, bei welcher eine Breite der Fließstrecke des geschmolzenen Glases in dem Breitenabschnitt (31, 32) die größte Breite W annimmt, den folgenden Gleichungen genügen:

    $2000 \leq W \leq 12000$ und $1000 \leq L \leq 20000$.

3.  Vorrichtung zum Herstellen von geschmolzenem Glas (1) gemäß Anspruch 1 oder 2, wobei der breite Abschnitt (31, 32) mit Mitteln (35) zum Rühren des geschmolzenen Glases, welches durch den breiten Abschnitt strömt, versehen ist.

4.  Vorrichtung zum Herstellen von geschmolzenem Glas (1) gemäß einem der Ansprüche 1 bis 3, wobei das Abtrennmittel eine Dammwand (21) ist, die von dem Boden der Fließstrecke des geschmolzenen Glases in den Schmelztank (2) vorsteht, wobei sich die Dammwand (21) in einer Breitenrichtung der Fließstrecke des geschmolzenen Glases in den Schmelztank (2) erstreckt, wobei, wenn die Höhe der Fließstrecke des geschmolzenen Glases an einer stromaufwärtigen Seite der Dammwand (21) in der Fließrichtung des geschmolzenen Glases in dem Schmelztank (2) durch $h_1$ dargestellt wird, die Höhe von dem Boden der Fließstrecke des geschmolzenen Glases an einer stromaufwärtigen Seite der Dammwand (21) in der Fließrichtung des geschmolzenen Glases zu dem oberen Ende der Dammwand (21) von 0,1 $h_1$ bis 0,3 $h_1$ beträgt.

5.  Vorrichtung zum Herstellen von geschmolzenem Glas (1) gemäß Anspruch 4, wobei in dem Schmelztank der Boden der Fließstrecke des geschmolzenen Glases an einer stromabwärtigen Seite der Dammwand (21) in der Fließrichtung des geschmolzenen Glases höher als der Boden der Fließstrecke des geschmolzenen Glases an einer stromaufwärtigen Seite der Dammwand (21) in der Fließrichtung des geschmolzenen Glases ist.

6.  Vorrichtung zum Herstellen von geschmolzenem Glas (1) gemäß Anspruch 5, wobei in dem Schmelztank (2), wenn $h_1$ (mm) die Höhe der Fließstrecke des geschmolzenen Glases an einer stromaufwärtigen Seite der Dammwand (21) in der Fließrichtung des geschmolzenen Glases darstellt, $h_2$ (mm) die Höhe von dem Boden der Fließstrecke des geschmolzenen Glases an einer stromaufwärtigen Seite der Dammwand (21) in der Fließrichtung des geschmolzenen Glases zu dem oberen Ende der Dammwand (21) darstellt, und $h_3$ (mm) die Höhe von dem Boden der Fließstrecke des geschmolzenen Glases an einer stromaufwärtigen Seite der Dammwand (21) in der Fließrichtung des geschmolzenen Glases zu dem Boden der Fließstrecke des geschmolzenen Glases an einer stromabwärtigen Seite der Dammwand (21) in der Fließrichtung des geschmolzenen Glases darstellt, $h_1$, $h_2$ und $h_3$ den folgenden Gleichungen genügen: $h_3 < h_2$ und $0 < h_3 \leq 0{,}6h_2$.

7. Vorrichtung zum Herstellen von geschmolzenem Glas (1) gemäß einem der Ansprüche 4 bis 6, wobei der Schmelztank (2) mit einem Blasenerzeuger (23) mit einer Austragsöffnung, angeordnet nahe dem Boden der Fließstrecke des geschmolzenen Glases an einer stromaufwärtigen Stelle der Dammwand (21) in der Fließrichtung des geschmolzenen Glases versehen ist, und der Abstand zwischen dem Blasenerzeuger (23) und der Dammwand (21) in der Fließrichtung des geschmolzenen Glases mindestens 500 mm beträgt.

8. Vorrichtung zum Herstellen von geschmolzenem Glas (1) gemäß einem der Ansprüche 1 bis 3, wobei das Abtrennmittel Blasengeneratoren (23) mit Austragsöffnungen, angeordnet nahe dem Boden der Fließstrecke des geschmolzenen Glases in dem Schmelztank (2) sind, wobei die Austragsöffnungen in der Breitenrichtung der Fließstrecke des geschmolzenen Glases angeordnet sind.

9. Vorrichtung zum Herstellen von geschmolzenem Glas (1) gemäß einem der Ansprüche 1 bis 8, wobei Mittel zum Heizen des geschmolzenen Glases, welches durch die erste Leitungsstruktur (3) strömt, an einer stromabwärtigen Stelle des breiten Abschnitts (31, 32) in der Fließrichtung des geschmolzenen Glases angeordnet sind.

10. Vorrichtung zum Herstellen von geschmolzenem Glas (1) gemäß einem der Ansprüche 1 bis 9, wobei die Position der Fließstrecke des geschmolzenen Glases in der ersten Leitungsstruktur (3) an einer stromabwärtigen Stelle des breiten Abschnitts (31, 32) in der Fließrichtung des geschmolzenen Glases niedriger als die Position der Fließstrecke des geschmolzenen Glases in dem breiten Abschnitt (31, 32) ist.

11. Verfahren zur Herstellung von geschmolzenem Glas, welches eine Vorrichtung zum Herstellen von geschmolzenem Glas (1), wie in einem der Ansprüche 1 bis 10 beschrieben, anwendet.

12. Verfahren zur Herstellung von geschmolzenem Glas gemäß Anspruch 11, wobei in dem Schmelztank (2) ein Glasmaterial durch Verbrennungswärme eines Gemisches von Brennstoff und Sauerstoff geschmolzen wird.

13. Verfahren zur Herstellung von geschmolzenem Glas gemäß Anspruch 11 oder 12, wobei die Menge an Blasen in dem geschmolzenem Glas, welche durch das Vakuumentlüftungsgefäß (52) der Vakuumentlüftungsvorrichtung (5) strömen, mit einem Blaseninspektionsmittel gemessen wird, um das Ausmaß der Entspannung in dem Vakuumentlüftungsgefäß (52) in Antwort auf ein Meßergebnis bezüglich der Blasen einzustellen.

14. Verfahren zur Herstellung von geschmolzenem Glas gemäß einem der Ansprüche 1 bis 13, wobei das geschmolzene Glas geschmolzenes Glas von Natronkalkglas ist.

15. Vorrichtung zum Herstellen eines Glasgegenstands, welche eine Vorrichtung zur Herstellung von geschmolzenem Glas (1), wie in einem der Ansprüche 1 bis 10 beschrieben, ein Formungsmittel, angeordnet an einer stromabwärtigen Stelle der Vorrichtung zur Herstellung von geschmolzenem Glas (1), um das geschmolzene Glas zu bilden, und eine Kühlvorrichtung zum Kühlen des geformten Glases umfaßt.

16. Verfahren zur Herstellung eines Glasgegenstands, welches einen Schritt des Herstellens von geschmolzenem Glas durch ein Verfahren zur Herstellung von geschmolzenem Glas, wie in einem der Ansprüche 11 bis 14 beschrieben, einen Schritt des Formens des geschmolzenen Glases und einen Schritt des Abkühlens des geformten Glases umfaßt.

## Revendications

1. Dispositif de production de verre fondu (1) comprenant une cuve de fusion (2) pour la fusion d'un matériau en verre, un dispositif de dégazage sous vide (5) comportant une partie intérieure maintenue sous une pression inférieure à la pression atmosphérique de sorte que des bulles dans le verre fondu fourni à partir de la cuve de fusion soient éliminées en montant et en étant rompues, une première structure de conduite (3) connectant la cuve de fusion (2) au dispositif de dégazage sous vide (5), et une deuxième structure de conduite (6) disposée du côté aval du dispositif de dégazage sous vide (5) pour introduire le verre fondu vers un moyen de mise en forme, le dispositif de production de verre fondu (1) étant **caractérisé en ce que** la cuve de fusion (2) est dotée d'un moyen de séparation pour séparer la zone destinée à la circulation du verre fondu dans la cuve de fusion (2) en un courant de circulation amont et un courant de circulation aval, la distance entre le moyen de séparation et l'extrémité aval du trajet d'écoulement de verre fondu dans la cuve de fusion (2) est de 0,1 $L_F$ à 0,45 $L_F$, où $L_F$ représente la longueur du trajet d'écoulement de verre fondu dans la cuve de fusion (2), une partie large (31, 32) est formée dans la première structure de conduite (3) du côté amont selon la direction d'écoulement du verre fondu, la largeur de la partie large (31, 32) étant supérieure à une autre zone de la première structure de conduite (3), la partie large (31, 32) est dotée d'un moyen pour empêcher le verre fondu de refouler dans la partie large (31, 32), le moyen pour empêcher le verre fondu de refouler est un moyen (34) pour refroidir le verre fondu traversant la partie large (31, 32) et est disposé dans la partie large (31, 32), ledit moyen de refroidissement (34) étant inséré dans le verre fondu de façon à être immergé dans celui-ci, et dans lequel la partie large (31, 32) satisfait aux formules (3) et (4) suivantes :

$$0,2 \leq W/L \leq 1,5 \qquad (3)$$

$$500 \leq h \leq 5000 \qquad (4)$$

où, dans les formules (3) et (4), W représente la largeur maximale (mm) du trajet d'écoulement de verre fondu, h représente la hauteur (mm) du trajet d'écoulement de verre fondu dans la partie dans laquelle la largeur du trajet d'écoulement de verre fondu prend la plus grande largeur W, et L représente la longueur (mm) de la partie où la largeur du trajet d'écoulement de verre fondu dans les parties larges (31, 32) prend la plus grande largeur W.

2. Dispositif de production de verre fondu (1) selon la revendication 1, dans lequel, dans la partie large (31, 32), la plus grande largeur W (mm) du trajet d'écoulement de verre fondu et la longueur L (mm) de la zone où la largeur du trajet d'écoulement de verre fondu dans la partie large (31, 32) prend la plus grande largeur W satisfont aux formules : $2000 \leq W \leq 12000$ et $1000 \leq L \leq 20000$.

3. Dispositif de production de verre fondu (1) selon la revendication 1 ou 2, dans lequel la partie large (31, 32) est dotée d'un moyen (35) pour agiter le verre fondu traversant la partie large.

4. Dispositif de production de verre fondu (1) selon l'une quelconque des revendications 1 à 3, dans lequel le moyen de séparation est une paroi de barrage (21) faisant saillie à partir du fond du trajet d'écoulement de verre fondu dans la cuve de fusion (2), la paroi de barrage (21) s'étendant dans le sens de la largeur du trajet d'écoulement de verre fondu dans la cuve de fusion (2), et dans lequel, quand la hauteur du trajet d'écoulement de verre fondu du côté amont de la paroi de barrage (21) selon la direction de l'écoulement du verre fondu dans la cuve de fusion (2) est représentée par $h_1$, la hauteur entre le fond du trajet d'écoulement de verre fondu du côté amont de la paroi de barrage (21) selon la direction de l'écoulement du verre fondu et l'extrémité supérieure de la paroi de barrage (21) est de 0,1 $h_1$ à 0,3 $h_1$.

5. Dispositif de production de verre fondu (1) selon la revendication 4, dans lequel, dans la cuve de fusion (2), le fond du trajet d'écoulement de verre fondu du côté aval de la paroi de barrage (21) selon la direction de l'écoulement du verre fondu est plus haut que le fond du trajet d'écoulement de verre fondu du côté amont de la paroi de barrage (21) selon la direction de l'écoulement du verre fondu.

6. Dispositif de production de verre fondu (1) selon la revendication 5, dans lequel, dans la cuve de fusion (2), quand $h_1$ (mm) représente la hauteur du trajet d'écoulement de verre fondu du côté amont de la paroi de barrage (21) selon la direction de l'écoulement du verre fondu, $h_2$ (mm) représente la hauteur entre le fond du trajet d'écoulement de verre fondu du côté amont de la paroi de barrage (21) selon la direction de l'écoulement du verre fondu et l'extrémité supérieure de la paroi de barrage (21), et $h_3$ (mm) représente la hauteur entre le fond du trajet d'écoulement de verre fondu du côté amont de la paroi de barrage (21) selon la direction de l'écoulement du verre fondu et le fond du trajet d'écoulement de verre fondu du côté aval de la paroi de barrage (21) selon la direction de l'écoulement du verre fondu, $h_1$, $h_2$ et $h_3$ satisfont aux formules suivantes : $h_3 < h_2$ et $0 < h_3 \leq 0,6 h_2$.

7. Dispositif de production de verre fondu (1) selon l'une quelconque des revendications 4 à 6, dans lequel la cuve de fusion (2) est dotée d'un générateur de bulles (23) comportant un orifice d'évacuation situé près du fond du trajet d'écoulement de verre fondu du côté amont de la paroi de barrage (21) selon la direction de l'écoulement du verre fondu, et la distance entre le générateur de bulles (23) et la paroi de barrage (21) selon la direction de l'écoulement du verre fondu est d'au moins 500 mm.

8. Dispositif de production de verre fondu (1) selon l'une quelconque des revendications 1 à 3, dans lequel le moyen de séparation est un générateur de bulles (23) comportant des orifices d'évacuation situés près du fond du trajet d'écoulement de verre fondu dans la cuve de fusion (2), les orifices d'évacuation étant agencés dans le sens de la largeur du trajet d'écoulement de verre fondu.

9. Dispositif de production de verre fondu (1) selon l'une quelconque des revendications 1 à 8, dans lequel sont disposés des moyens pour chauffer le verre fondu traversant la première structure de conduite (3) du côté aval de la partie large (31, 32) selon la direction de l'écoulement du verre fondu.

10. Dispositif de production de verre fondu (1) selon l'une quelconque des revendications 1 à 9, dans lequel la position du trajet d'écoulement de verre fondu dans la première structure de conduite (3) du côté aval de la partie large (31, 32) selon la direction de l'écoulement de verre fondu est plus basse que la position du trajet d'écoulement de verre fondu dans la partie large (31, 32).

11. Procédé de production de verre fondu utilisant un dispositif de production de verre fondu (1) décrit dans l'une quelconque des revendications 1 à 10.

12. Procédé de production de verre fondu selon la revendication 11, dans lequel, dans la cuve de fusion (2), un matériau en verre est fondu par la chaleur de combustion d'un mélange de combustible et d'oxygène.

13. Procédé de production de verre fondu selon la revendication 11 ou 12, dans lequel la quantité de bulles dans le verre fondu traversant le récipient de dégazage sous vide (52) du dispositif de dégazage sous vide (5) est mesurée avec un moyen d'inspection de bulles destiné à ajuster le degré de dépressurisation dans le récipient de dégazage sous vide (52) en réponse au résultat de mesure des bulles.

14. Procédé de production de verre fondu selon l'une quelconque des revendications 11 à 13, dans lequel le verre fondu est un verre fondu de verre sodocalcique.

15. Dispositif pour produire un article en verre qui comprend un dispositif de production de verre fondu (1) décrit dans l'une quelconque des revendications 1 à 10, un moyen de mise en forme disposé du côté aval du dispositif de production de verre fondu (1) pour mettre en forme le verre fondu, et un moyen de recuit pour recuire le verre mis en forme.

16. Procédé pour produire un article en verre qui comprend une étape de production de verre fondu par un procédé de production de verre fondu décrit dans l'une quelconque des revendications 11 à 14, une étape de mise en forme du verre fondu, et une étape de recuit du verre mis en forme.

**Fig. 1**

**Fig. 2**

# Fig. 3

Molten glass producing step by molten glass producing method

↓

Forming step by forming means

↓

Annealing step by annealing mans

↓

Cutting step by cutting means and/or subsequent step, if required

↓

Glass article

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0556576 A
- JP 2221129 A
- JP 9124323 A